Europäisches Patentamt

European Patent Office

Office européen des brevets

(11) Veröffentlichungsnummer: **0 099 511**
**A2**

(12) **EUROPÄISCHE PATENTANMELDUNG**

(21) Anmeldenummer: **83106591.7**

(22) Anmeldetag: **06.07.83**

(51) Int. Cl.$^3$: **G 01 K 17/06**

(30) Priorität: **06.07.82 DE 8219286 U**

(43) Veröffentlichungstag der Anmeldung:
**01.02.84 Patentblatt 84/5**

(84) Benannte Vertragsstaaten:
**AT BE CH DE FR IT LI LU NL SE**

(71) Anmelder: **Kieninger & Obergfell Fabrik für technische Laufwerke und Apparate GmbH & Co.**
**Bahnhofstrasse 8-10 Postfach 1332**
**D-7742 St. Georgen (Schwarzwald)(DE)**

(72) Erfinder: **Krämer, Jürgen**
**Im Sänget 9**
**D-7742 St. Georgen 4(DE)**

(72) Erfinder: **Rauer, Manfred**
**Lochackerstrasse 1**
**D-7742 St. Georgen 4(DE)**

(72) Erfinder: **Wöhrstein, Hermann**
**Winterbergstrasse 25**
**D-7742 St. Georgen(DE)**

(54) **Elektrischer Heizkostenverteiler.**

(57) Die Erfindung betrifft einen elektrischen Heizkostenverteiler, dem ein von einem elektro-magnetischen Schrittmotor über ein Untersetzungsgetriebe angetriebenes Zählwerk zugeordnet ist, das als ein den Wärmeverbrauch digital in Zifferneinheiten anzeigendes Rollenzählwerk ausgebildet ist, welches mit dem Schrittmotor und dem Untersetzungsgetriebe eine baulich geschlossene Anzeigeeinheit bildet.

Diese Anzeigeeinheit kann zusammen mit den elektrischen und elektronischen Bauelementen und der Speisebatterie des Heizkostenverteilers auf einer gedruckten Leiterplatte angeordnet sein. Anzeigeeinheit, Bauelemente, Batterien und gedruckte Leiterplatte bilden dann zusammen eine selbständig funktionsfähige, austauschbare Baueinheit.

Fig. 2

EP 0 099 511 A2

Croydon Printing Company Ltd.

-7-

Die Erfindung betrifft einen elektrischen Heizkostenverteiler nach dem Oberbegriff des Anspruches 1.

Zweck der Erfindung ist es, die Betriebsbedingungen beim Einsatz von elektrischen bzw. elektronischen Heizkostenverteilern zu begünstigen.

Ein elektrischer Heizkostenverteiler mit den Merkmalen des Oberbegriffes des Anspruches 1 ist bekannt.

Bei den bekannten elektrischen Heizkostenverteilern sind die gedruckte Leiterplatte mit den elektrischen und elektronischen Bauelementen der Steuerschaltung, das Zählwerk und die Batterie jeweils getrennt voneinander angeordnet und müssen bei der Montage des elektrischen Heizkostenverteilers nacheinander und unabhängig voneinander montiert werden. Hierbei sind die Teile im Gehäuseoberteil angeordnet. Eine Funktionsprüfung aller verwendeten Baugruppen zusammen ist also nur bei eingebauten Teilen möglich. Hierbei sind jedoch die Teile bzw. Baugruppen schlecht zugänglich, da sie weitgehend von dem Gehäuseoberteil umgeben bzw. von diesem abgedeckt sind. Um eine sichere elektrische Verbindung zwischen den einzelnen Baugruppen zu gewährleisten sind ferner Draht- oder Litzenverbindungen zwischen diesen hin und her zu verlegen, was sehr aufwendig ist.

Bei diesem bekannten elektrischen Heizkostenverteiler ist das Zählwerk mit einer umlaufenden Zeigeranzeige versehen, welche über ein Uhrwerk durch einen elektrischen Schrittmotor antreibbar ist, der seinerseits über die Steuerschaltung impulsweise fortgestellt wird.

Die Steuerschaltung dieses bekannten elektrischen Heizkostenverteilers kann am Heizkörper nur bei geschlossenem Gehäuse betrieben werden und ist dann somit nicht zu Messungen und Beobachtungen im Betriebszustand am Heizkörper zugänglich. Dies erschwert die Ermittlung und Behebung der Ursache von Betriebsstörungen.

Es ist ferner ein elektrischer Heizkostenverteiler mit einer Anzeige durch ein mehrstelliges Rollenzählwerk bekannt.
Bei diesem bekannten Heizkostenverteiler stellen jedoch Rollenzählwerke und dessen Antrieb voneinander getrennte, unabhängige Baugruppen dar, welche getrennt und unabhängig von der Steuerschaltung montierbar sind.

Der Erfindung liegt somit die Aufgabe zugrunde, die bekannten elektrischen Heizkostenverteiler derart weiterzubilden und auszugestalten, daß eine einfache und preiswerte Montage, eine leichte Prüfung und Messung, ggf. auch unter Betriebsbedingungen am Heizkörper möglich sind.

Die Erfindung löst die gestellte Aufgabe durch die Merkmale
des Kennzeichens im Anspruch 1.

Eine Reihe von Ausgestaltungen und Weiterbildungen des Gegenstandes nach der Erfindung sind in den dem Anspruch 1 nachgeordneten
Unteransprüchen umschlossen.

Durch die Erfindung kann die aus Baugruppen, Bauelementen und
der Leiterplatte gebildete Baueinheit funktionsfähig und von
allen Seiten zugänglich geprüft und ausgemessen werden. Dies ist
vor allem bei einer automatischen oder teilautomatischen Fertigung
von Bedeutung. Unmittelbar bei der Montage ist das Bauteil der
gedruckten Leiterplatte allseitig zugänglich und nach deren
Lötung ist eine laufende elektrische Meßkontrolle möglich.
Nach dem Einbau der durch die gedruckte Leiterplatte gebildeten
Baugruppe in das Gehäuse des elektrischen Heizkostenverteilers
sind weitere elektrische Prüfungen nicht mehr notwendig.

Die Erfindung ist in der nachfolgenden Beschreibung in Form eines
Ausführungsbeispieles erläutert und durch die beigegebenen
Zeichnungen dargestellt.

Es zeigen:

Figur 1      eine Vorderansicht mit Aufriß des elektrischen
             Heizkostenverteilers nach der Erfindung

Figur 2      eine Seitenansicht mit Aufriß des elektrischen
             Heizkostenverteilers nach Figur 1;


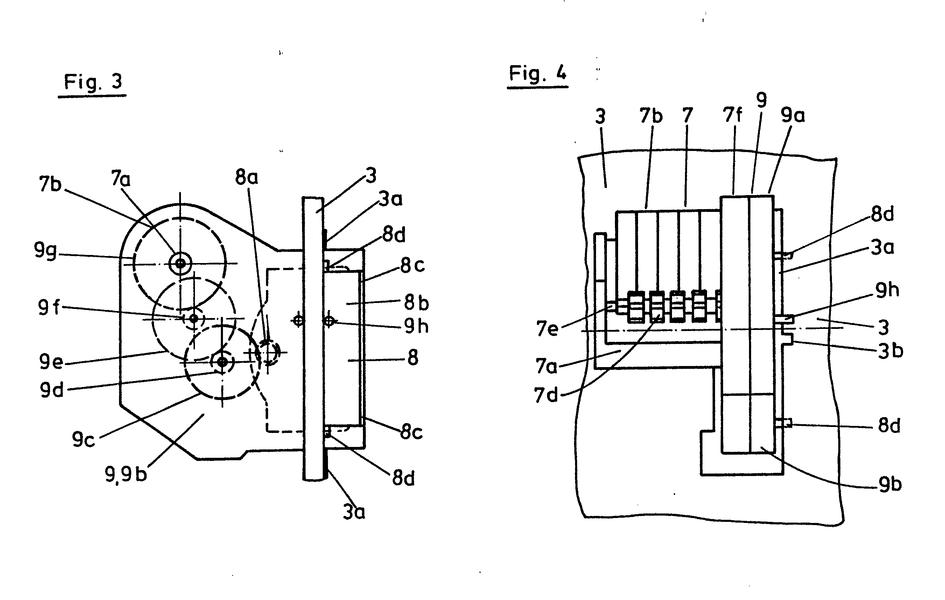

Figur 3      eine Seitenansicht einer Baugruppe des elektrischen
             Heizkostenverteilers nach der Erfindung;


Figur 4      eine Draufsicht auf die Baugruppe nach Fig. 3
             entsprechend der Darstellung nach Figur 1.


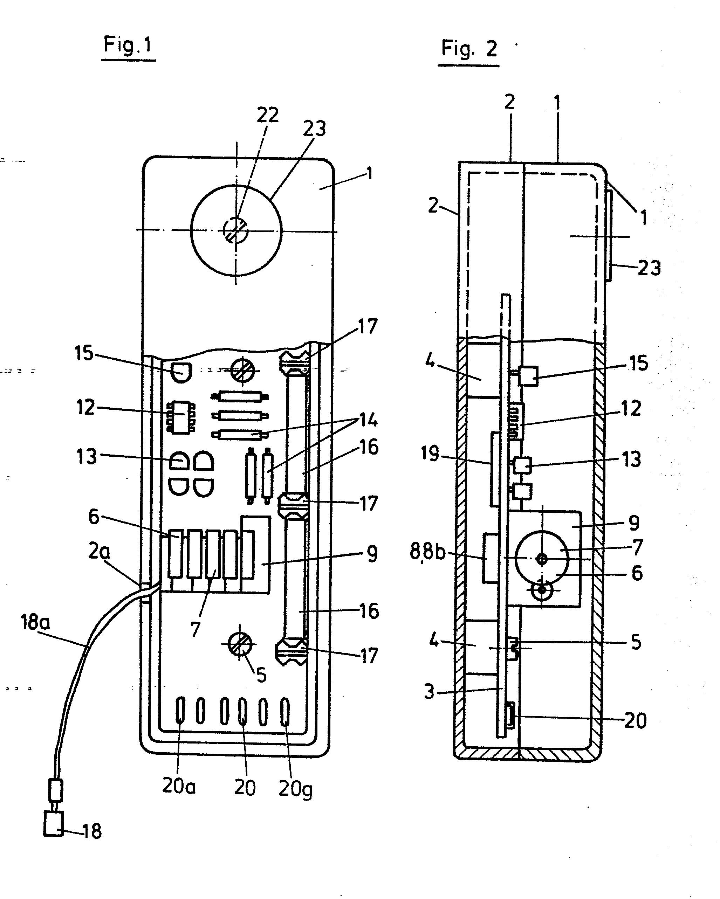

In den Figuren 1 und 2 bilden das abgeschnittene Gehäusevorderteil 1 und das teilweise aufgeschnittene Gehäuseunterteil 2
das Gehäuse 1,2 des elektrischen Heizkostenverteilers.


Im Gehäuse 1,2 ist eine gedruckte Leiterplatte 3 angeordnet,
welche auf Säulen 4 des Gehäuseunterteiles 2 angeordnet und
durch Schrauben 5 auf diesen gehaltert ist.


Auf dieser gedruckten Leiterplatte ist nun eine Anzeigeeinheit 6
angeordnet, welche aus einem Rollenzählwerk 7, dem Schrittmotor 8 und dem Untersetzungsgetriebe 9 gebildet ist.


Das Rollenzählwerk 7 setzt sich aus dem Lagerteil 7a, den
Zahlenrollen 7b, der Zahlenrollenachse 7c sowie den Schaltritzeln 7d und der Schaltritzelwelle 7e zusammen.

An dem Lagerteil 7a des Rollenzählwerkes 7 ist eine Lagerschale 7f angeformt. Zweckmäßig werden dieses Lagerteil 7a
und diese Lagerschale 7f im Kunststoffspritzverfahren als
ein Teil hergestellt.

Der Lagerschale 7f steht eine zweite Lagerschale 9a gegenüber.
Beide Lagerschalen 7f und 9a bilden das Getriebegehäuse 9b
des Getriebes 9. Zwischen den Lagerschalen 7f und 9a ist der
Schrittmotor 8 gehaltert und sind die Getrieberäder 9c - 9f
gelagert. Das Getrieberad 9c wird von dem Motorritzel 8a
des Schrittmotores 8 angetrieben und vermittelt diese Drehbewegung weiter über die Getriebeelemente 9d, 9e, 9f des
Getriebes 9 auf die Verzahnung 9g der ersten Zahl der Zahlenrollen 7bdes Rollenzählwerkes 7.

Die Bewegungen der Zahlenrollen 7b werden jeweils über nachgeordnete Schaltritzel 7d auf der Schaltritzelwelle 7e im
Verhältnis 1 : 1o übersetzt auf die jeweils nachgeordneten
Zahlenrollen 7b übertragen.

Der zwischen den Lagerschalen 7f und 9a des Getriebegehäuses 9b
des Getriebes 9 gehalterte Schrittmotor 8  ragt mit seiner
Spule 8b und mit den diese noch umgreifenden Fortsätzen der
Lagerschalen 7f und 9a durch einen geeignet geformten
Ausbruch 3a der gedruckten Leiterplatte 3.

Dieser Ausbruch 3a ist etwas größer gewählt als den Abmessungen der Fortsätze der Lagerschalen 7f und 9a entspricht. Dadurch ist die Anzeigeinheit 6 in dem Ausbruch 3a verschiebbar, so daß zwei Ansätze 9h der Lagerschale 9a, deren einer durch die Lücke 3b der gedruckten Leiterplatte 3 hindurchgeführt worden ist, je oberhalb und unterhalb der gedruckten Leiterplatte 3 zur Anlage gelangen und diese so in der Richtung senkrecht zur Leiterplatte 3 sichern.

Spulenstifte 8d, welche sich seitlich aus den Flanschen 8c der Spule 8b erstrecken, werden durch Löten oder Schweißen mit Leiterbahnen 3c auf der Rückseite der gedruckten Leiterplatte 3 befestigt und dadurch wird auch die Position der Anzeigeinheit 6 auf der gedruckten Leiterplatte 3 fixiert und die Spule 8b mit der Steuerschaltung des elektrischen Heizkostenverteilers verbunden.

Die Anzeigeinheit 6 liegt hierbei auf der Oberfläche der gedruckten Leiterplatte 3 mit dem unteren Steg des Lagerteiles 7a flach auf.

Auf der gedruckten Leiterplatte 3 sind nun neben der Anzeigeeinrichtung 6 eine Reihe von Bauelementen der Steuerschaltung angeordnet und mit den rückwärtigen Leiterbahnen 3c elektrisch und mechanisch verbunden.

So sind in den Figuren 1 und 2 ein integrierter Schaltkreis 12, vier Transistoren 13 für die Brückenschaltung des Schrittschaltmotors 8, sowie Widerstände 14 erkennbar.

Nahe des integrierten Schaltkreises 12 ist auch der Luftsensor 15, der der Bestimmung der Umlufttemperatur dient, auf der gedruckten Leiterplatte 3 angeordnet. Durch nicht näher dargestellte Lüftungsschlitze in dem Gehäuseoberteil 1 hindurch, welche unterhalb und oberhalb des Luftsensors 15 vorgesehen sind, (in Montagestellung des elektrischen Heizkostenverteilers am Heizkörper), wird durch Kaminwirkung eine Luftströmung aus Umluftelementen erzeugt, welche den Luftsensor 15 umspült, um diesem den Temperaturwert der Umluft durch Konvektion zu vermitteln.

Es versteht sich, daß in den Figuren 1 und 2 nur einige der in Verwendungkommenden elektrischen und/oder elektronischen Bauelemente dargestellt sind.

Die Anordnung ist so getroffen, daß die elektrischen und/oder elektronischen Bauelemente 1o - 15 sowie die Anzeigeeinheit 6 links auf der Oberfläche der gedruckten Leiterplatte 3 in Fig. 1 angeordnet sind. Rechts davon sind zwei Stabbatterien 16, welche der Stromversorgung des elektrischen Heizkostenverteilers dienen, längs der rechten Seitenkante der gedruckten Leiterplatte 3 hintereinander angeordnet.

Diese Batterien 16 werden durch Batteriehaltefedern 17, die durch die gedruckte Leiterplatte 3 hindurch mit rückwärtigen Leiterbahnen 3c verbunden sind, federnd gehaltert. Es stehen somit für die Versorgung der Steuerschaltung des elektrischen Heizkostenverteilers sowohl 1,5 V als auch 3 V Gleichspannung zur Verfügung.

Der Heizkörper-Sensor 18, der der Temperaturmessung unmittelbar an der Oberfläche des zu überwachenden Heizkörpers dient, ist über eine Zuleitung 18a durch eine Ausnehmung 2a des Gehäuseunterteiles 2 hindurch ebenfalls mit Leiterbahnen 3c der gedruckten Leiterplatte 3 verbunden.

Auf der Rückseite der gedruckten Leiterplatte 3 ist ein den Funktionsablauf des elektrischen Heizkostenverteilers steuernder und die Meßdaten der Luft- und Heizkörper-Sensoren 15, 18 verarbeitender Mikro-Computer-Chip 19 angeordnet und unmittelbar über eine Vielzahl von Anschlußenden mit Leiterbahnen 3c der gedruckten Leiterplatte 3 verbunden.

Gemäß einem wesentlichen Merkmal der Erfindung sind nun alle elektrischen und elektronischen Bauelemente des elektrischen Heizkostenverteilers einschließlich der Luft- und Heizkörper-Sensoren 15, 18 und der Anzeigeeinheit 6 auf der gedruckten Leiterplatte 3 so zusammengefaßt und über die rückwärtigen Leiterbahnen 3c elektrisch miteinander verbunden, daß eine funktionsfähige Baueinheit vorliegt.

Da die gedruckte Leiterplatte 3 mit den aufgebrachten Bauelementen 12 - 19 und der Anzeigeeinheit 6 bereits einen
funktionsfähigen elektrischen Heizkostenverteiler darstellt,
läßt sich vor allem eine halb- oder vollautomatische Fertigung
dieser Einheit sehr vereinfachen. Alle Prüf- und Meßvorgänge
können an der gedruckten Leiterplatte 3 bzw. an deren Leiterbahnen 3c und Bauelementen 12 - 19 direkt vorgenommen werden.
Hierbei ist die gedruckte Leiterplatte 3 von allen Seiten der
Behandlung und Beaufschlagung zugänglich. Alle im elektrischen
Bereich möglichen Fehler können so schon vor einer Montage
der gedruckten Leiterplatte 3 im Gehäuse 1,2 des elektrischen
Heizkostenverteilers voll erfaßt werden.

Die gedruckte Leiterplatte 3 ist als vollständige Baueinheit
im Gehäuseunterteil 2 montierbar und insofern unabhängig vom
Gehäuseoberteil 1.

Dadurch ist die gedruckte Leiterplatte 3 auch bei abgenommenem
Gehäuseoberteil 1 in voller Funktion zugänglich, so daß ggf.
Messungen und Funktionsbeobachtungen unmittelbar "vor Ort"
durchführbar sind.

Das Gehäuseoberteil 1 ist mit dem Gehäuseunterteil 2 unten
durch ein übliches, nicht näher dargestelltes Hakenscharnier
und oben durch einen außen von einer Siegelplakette 23 abgedeckten Rastbolzen 22 verbunden.

Das Gehäuseunterteil 2 des elektrischen Heizkostenverteilers ist mit dem Heizkörper über ein Adapterteil verbunden, das ein dem Rippenprofil des Heizkörpers entsprechendes Profil aufweist. Das Adapterteil, das nicht dargestellt ist, wird zweckmäßig aus einem Strangprofil passenden Querschnittes gefertigt. Es ist vorzugsweise aus Metall gefertigt und dient vorteilhaft auch zur Aufnahme des Heizkörper-Sensors 18 in einer hierzu geeigneten Öffnung. Das Gehäuseunterteil 2 wird in eine Führung des Adapterteiles eingeschoben und in dieser Position durch das dann aufgesetzte Gehäuseoberteil 1 gesichert. Dieses Adapterteil ist nicht dargestellt, da es nicht unmittelbar Gegenstand der Erfindung ist.

Gemäß einer zweckmäßigen Ausgestaltung der Erfindung ist auf der gedruckten Leiterplatte 3 auch noch ein der Eingabe von Heizkörper-Kenndaten dienender Schalter 2o vorgesehen.

Bekanntlich weisen unterschiedliche Heizkörper unterschiedliche Kenndaten für ein und denselben Heizkostenverteiler auf, die zweckmäßig am elektrischen Heizkostenverteiler einstellbar sind, um ein und dieselbe Type eines Gerätes für mehrere oder viele unterschiedliche Anwendungsfälle verwendbar gestalten zu können.

Unterschiede in den Kenndaten der einzelnen Heizkörperarten ergeben sich zunächst durch die bei ein und derselben mittleren Oberflächentemperatur unterschiedlichen spezifischen Leistungen.

Es sind aber auch Unterschiede in den thermischen Übertragungsdaten von der Heizkörperoberfläche nach dem Heizkörper-Sensor
feststellbar, welche durch unterschiedliche, an die jeweiligen
Heizkörper angepaßte Adapterteile bedingt sind.

Alle diese spezifischen Kennzeichen-Größen müssen berücksichtigt
und in Form einer Eichkonstante C der Steuerschaltung eingegeben
werden. Um die Vielzahl dieser möglichen Kennwerte in einem
möglichst weiten Umfang erfassen zu können, wird deshalb
zweckmäßig ein codiert einstellbarer Schalter verwendet.

Im Falle des Ausführungsbeispieles nach der Erfindung ist dieser
auf der gedruckten Leiterplatte 3 aufgebrachte Schalter 2o
zweckmäßig als Trennschalter ausgebildet, derart, daß eine Reihe
von mit Leiterbahnen 3c an der gedruckten Leiterplatte 3
verbundene Drahtbrücken 2oa - 2og, die vorteilhaft nebeneinander
in einer Reihe an der gedruckten Leiterplatte 3 angeordnet sind,
für die Trennung durch ein geeignetes mechanisches Werkzeug
zugänglich sind. Dieses Werkzeug kann z.B. ein Seitenschneider
oder eine sonstige geeignete Einrichtung sein.

Im Fall des Ausführungsbeispieles nach der Erfindung sind am
unteren Rand der gedruckten Leiterplatte 3 die Drahtbrücken 2oa
bis 2og nebeneinander in einer Reihe liegend, vorgesehen, welche
den codierten Schalter 2o bilden und auf der Rückseite der
gedruckten Leiterplatte 3 mit gedruckten Leiterbahnen 3c
verbunden sind.

- 12 -  **0099511**

Durch Abtrennen dieser Brücken nach einem bestimmten Code-Schema, ist die Einstellung der Steuerschaltung auf den jeweiligen Anwendungsfall möglich.

KIENINGER & OBERGFELL
Fabrik für technische
Laufwerke und Apparate
St. Georgen/Schwarzwald

-1-

Akten-Nr.: 336-IV/EP

Patentanmeldung

Elektrischer Heizkostenverteiler

Ansprüche

1. Elektrischer Heizkostenverteiler mit einem von einem
   elektro-magnetischen Schrittmotor über ein Untersetzungsgetriebe angetriebenen Zählwerk, das eine
   Anzeige der verbrauchten Wärmemenge bewirkt,
   dadurch gekennzeichnet,
   daß das Zählwerk als ein den Wärmeverbrauch digital
   in Zifferneinheiten anzeigendes Rollenzählwerk (7)
   ausgebildet ist, das mit dem Schrittmotor (8) und
   dem Untersetzungsgetriebe (9) eine Anzeigeeinheit (6)
   bildet.

2. Elektrischer Heizkostenverteiler nach Anspruch 1,
   dadurch gekennzeichnet,
   daß die durch das Rollenzählwerk (7) und den elektro-
   magnetischen Schrittmotor (8) nebst Untersetzungsgetriebe (9) gebildete Anzeigeeinheit (6) auf einer
   gedruckten Leiterplatte (3) angeordnet ist.

- 2 -

3. Elektrischer Heizkostenverteiler nach Anspruch 2,
   dadurch gekennzeichnet, daß auf der gedruckten
   Leiterplatte (3) neben der Anzeigeeinheit (6) des
   Rollenzählwerkes (7) elektrische und/oder elektronische
   Bauelemente (12 - 19) der elektrischen Steuerschaltung
   einschließlich wenigstens einer Batteriehalterung (17)
   zusammengefaßt sind.

4. Elektrischer Heizkostenverteiler nach Anspruch 3,
   dadurch gekennzeichnet,
   daß die Leiterplatte (3) mit der Anzeigeeinheit (6)
   den elektrischen und/oder elektronischen Bauelementen
   (12 - 19) sowie der Batteriehalterung (17) mit Batterie (16)
   eine selbständig funktionsfähige, austauschfähige und
   prüffähige Baueinheit bilden.

5. Elektrischer Heizkostenverteiler nach Anspruch 3,
   dadurch gekennzeichnet,
   daß das Gehäuse (1,2) des elektrischen Heizkostenverteilers aus einem Gehäuseoberteil (1) und einem
   Gehäuseunterteil (2) besteht, und daß die Leiterplatte (3)
   an dem Gehäuseunterteil (2) gehaltert ist.

6.  Elektrischer Heizkostenverteiler nach Anspruch 3,

    dadurch gekennzeichnet,

    daß auch der Luftsensor (15) auf der gedruckten
    Leiterplatte (3) angeordnet und daß der Heizkörper-
    Sensor (18) an Leiterbahnen (3c) der gedruckten
    Leiterplatte (3) angeschlossen ist.

7.  Elektrischer Heizkostenverteiler nach Anspruch 2,

    dadurch gekennzeichnet,

    daß die Anzeigeeinheit (6) des Rollenzählwerkes (7)
    mit dem Spulenkörper (8c) des Schrittmotors (8) in
    einer Ausnehmung (3a) der gedruckten Leiterplatte (3)
    versenkt angeordnet ist.

8.  Elektrischer Heizkostenverteiler nach Anspruch 7,

    dadurch gekennzeichnet,

    daß der Spulenkörper (8c) mit von diesem sich erstreckenden Spulenanschlüssen (8d) auf Leiterbahnen (3c)
    zur Anlage gelangt und durch Lötung oder Speisung
    mechanisch und elektrisch mit der gedruckten Leiterplatte (3) verbunden ist.

9.  Elektrischer Heizkostenverteiler nach Anspruch 3,

    dadurch gekennzeichnet,

    daß auf einer Seite der den Leiterbahnen (3c) abgewandten Seitenfläche der gedruckten Leiterplatte (3)
    die Anzeigeeinheit (6) und die elektrischen und/oder
    elektronischen Bauelemente (12 - 19) und auf der anderen Seite der gedruckten Leiterplatte (3)
wenigstens ein Batteriehalter (17) für wenigstens
eine Batterie (16) angeordnet sind.

1o. Elektrischer Heizkostenverteiler nach Anspruch 3,
dadurch gekennzeichnet,
daß auf der den Leiterbahnen (3c) der gedruckten
Leiterplatte (3) abgewandten Seite die Anzeigeeinheit (6) des Rollenzählwerkes (7), die diskreten
Bauelemente (13 - 15) und kleinere integrierte
Schaltkreise (12) angeordnet sind, während auf der
Seite der Leiterbahnen (3c) hochintegrierte Schaltkreise (19) mit zahlreichen Anschlüssen angeordnet
sind.

11. Elektrischer Heizkostenverteiler nach Anspruch 1o,
dadurch gekennzeichnet,
daß auf der Seite der Leiterbahnen (3c) der gedruckten
Leiterplatte (3) wenigstens ein Mikroprozessor-Chip (19)
angeordnet und mit den Leiterbahnen (3c) elektrisch
verbunden ist.

12. Elektrischer Heizkostenverteiler nach Anspruch 6,
dadurch gekennzeichnet,
daß der Heizkörper-Sensor (18) mit den Leiterbahnen (3c)
der gedruckten Leiterplatte (3) durch eine Zuleitung (18a)
verbunden ist.

**0099511**

13. Elektrischer Heizkostenverteiler nach Anspruch 3,

    dadurch gekennzeichnet,

    daß auf der gedruckten Leiterplatte (3) auch ein der Eingabe von Heizkörper-Kennwerten in die Steuerschaltung dienender codierter Schalter (2o) angeordnet und mit Leiterbahnen (3c) verbunden ist.

14. Elektrischer Heizkostenverteiler nach Anspruch 13,

    dadurch gekennzeichnet,

    daß der codierte Schalter (2o) durch auf der gedruckten Leiterplatte (3) aufgebrachte Drahtbrücken (2oa - 2og) gebildet ist, welche mit Leiterbahnen (3c) verbunden sind und nach einem bestimmten Code teilweise

    unterbrechbar sind.

Fig. 1

Fig. 2

Fig. 3

Fig. 4

0099511

2/2